# EUROPEAN PATENT SPECIFICATION

(11) **EP 2 390 141 B1**
(45) Date of publication and mention of the grant of the patent: **24.09.2014**
(21) Application number: 10164444.1
(22) Date of filing: 31.05.2010
(51) Int. Cl.: B60R 1/00, B60R 11/04

(54) **Optical sensor interface**
Optische Sensorschnittstelle
Interface de capteur optique

(43) Date of publication of application: 30.11.2011
(73) Proprietor: Volvo Car Corporation, 405 31 Göteborg (SE)
(72) Inventor: Petersson, Martin, 41721, Göteborg (SE)
(74) Representative: Widahl, Jenny Marie

(56) References cited:
- EP-A1- 1 627 773
- WO-A1-2006/064166
- WO-A1-2010/121982
- DE-A1- 19 706 043
- DE-A1- 19 805 000
- DE-A1-102006 008 272
- DE-A1-102008 020 954
- US-A- 6 108 141
- US-B2- 6 768 092

## Description

### Technical field

The present invention relates to a method to reduce the area and volume requirements and optimize transmission for window mounted optical sensors for motor vehicles in accordance with the preamble of claim 5, and further relates to a thin transparent refractive plastic film.

The present invention also relates to such window mounted optical sensors for motor vehicles having reduced area and volume requirements and optimized transmission properties in accordance with the preamble of claim 5, and further relates to a thin transparent refractive plastic film.

### Background of the invention

Optical sensor systems are frequently used in motor vehicles to provide information on the roadway around the vehicle. In the case of forward looking sensors, the information provided by the optical sensor systems are often used by other systems, such as lane tracking systems and adaptive cruise control systems. The function of these systems depends, at least in part, on the quality of the information acquired by the optical sensor system.

Windshield mounted optical sensors in today's motor vehicles occupies quite a substantial area and consequently there exist a conflict between the area requirement of these optical sensors and other demands, such as actually being able to have a clear view out of the windshield. Also, more and more equipment, such as sensors are competing for this area of the windshield. It is not only the driver of a vehicle who is inconvenienced by a substantial part of the windshield area being covered by sensors, but also a vehicle passenger. The trend toward increasing the angle of inclination of the windshield, to reduce air resistance, has inevitably resulted in an increase in the optical path distance. In the near future there will likely be sight ratings, by which the vehicle model will be judged.

Today, there also exist camera based optical sensors directed sideways in order to detect vehicles in adjacent lanes. These sensors are commonly mounted to the outside of the vehicle, usually integrated in the rear view mirror. However, there exist a number of drawbacks having sensors mounted to the outside of the vehicle, such as e.g. contamination by dirt, ice, droplets of water/rain, all of which reduces the functioning of the sensors substantially.

US6768092corresponds to the preamble of claims 1 and 5 and discloses a sensor in a car window that permits a reduction in size thereof, i.e. featuring a reduced maximum optical path distance from a windowpane. The sensor includes a lens that is provided on the inner side of a sloping windshield to condense light coming from an object to be detected that is located outside the windshield, a sensor main body that detects the object to be detected by means of the light that has passed through the lens, and a transparent glass pane that is provided between the windshield and the lens to refract the light from the object to be detected that has passed through the windshield. Rays are shifted downward in the middle of the optical path because of the refractive index of the transparent glass pane being larger than that of air. The transparent glass pane is attached to the windshield by a light-transmitting adhesive agent. Thus, the horizontal distance between the point at which light from an object to be detected exits from the inner surface of a windowpane and the center line of a lens can be reduced, allowing the sensor in a car window to be made smaller.

EP1627773 discloses a refractive block that includes a light-entrance surface configured to be mounted to a refractive boundary, such as a windshield of a vehicle, and a light-exit surface wherein the refractive block is configured to refract an optical path of light corresponding to an imaged area and to direct the light to an image-sensing component. The refractive block minimizes the footprint of the system and reduces the surface area on the outside surface of the refractive boundary that must be kept clean. An adhesive with an index of refraction substantially similar to the refractive boundary is used to mount the refractive block to the refractive boundary. More specifically, the optical path of the imaging system may be reduced to the surface area of the refractive block that is in contact with the refractive boundary. Further, the optical path of light may be placed closer to a viewer's field of view without placing the system within the viewer's field of view. As a result, the overall footprint, or the entire space occupied by the system, may thereby be reduced. The refractive block may be formed of glass or polymeric materials. The refractive block may be coupled to the windshield using a suitable filler material or adhesive material that is optically transparent and has a comparable index of refraction as that of the refractive block. The shape of the refractive block may be tailored to optimize the packaging of the imaging system in proximity to the windshield.

The prior art documents proposes solutions using refractive elements at an inside of a windowpane in order to enable the acquisition of optical information from outside the vehicle, whilst at the same time enabling a more space effective packaging of the optical sensor system in proximity to the windowpane.

### Summary of the invention

One object of the invention is to provide an improved method to reduce the area and volume requirements and optimize transmission for window mounted optical sensors for motor vehicles.

This object is achieved by the method as claimed in claim 1.

Thanks to the provision of the steps of: arranging an optical sensor on the inner side of a windowpane of the motor vehicle to condense light coming from an object to be detected that is located outside the windowpane of the motor vehicle and to obtain information from the light that has been thus condensed; and providing a refractive transparent area at the inside surface of the windowpane between the windowpane and the optical sensor to refract the light from the object to be detected that has passed through the windowpane an improved method to reduce the area and volume requirements and optimize transmission for window mounted optical sensors for motor vehicles is provided.

A further object of the invention is to provide an improved window mounted sensor system for motor vehicles having reduced area and volume requirements and optimized transmission properties comprising an optical sensor arranged on the inner side of a windowpane of the motor vehicle to condense light coming from an object to be detected that is located outside the windowpane of the motor vehicle and to obtain information from the light that has been thus condensed.

This object is achieved by the system as claimed in claim 5.

Thanks to the provision of a refractive transparent area provided at the inside surface of the windowpane between the windowpane and the optical sensor to refract the light from the object to be detected that has passed through the windowpane, an improved window mounted sensor system for motor vehicles having reduced area and volume requirements and optimized transmission properties is provided.

Preferred embodiments are listed in the dependent claims.

### Description of drawings

In the following, the invention will be described in greater detail by way of example only with reference to attached drawings, in which
Fig. 1 illustrates schematically the footprint of a prior art optical sensor system; and
Fig. 2 illustrates the footprint of an optical sensor system in accordance with the present invention.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### Description of embodiments

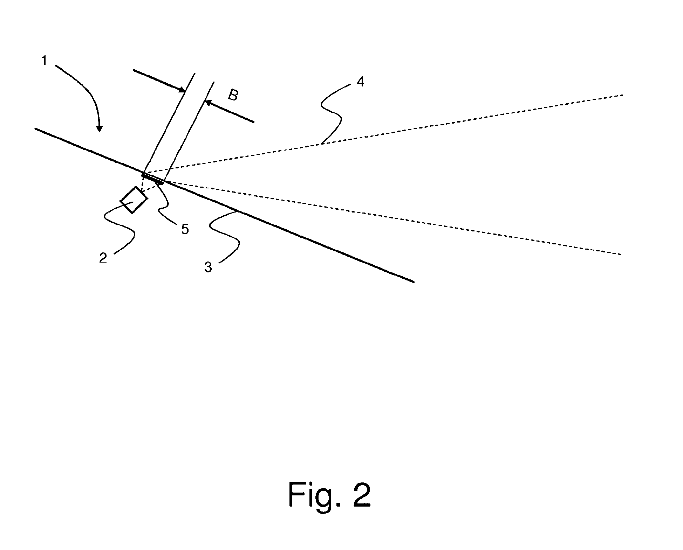

In overview, the present invention relates to a method and a sensor system 1, as illustrated in figure 2, for reducing the surface area and volume requirements for window mounted optical sensors 2 for motor vehicles.

A method and a sensor system 1 are provided herein to improve the implementation of optical sensor systems that are designed to acquire optical information through windowpanes 3 in vehicles. For example, the system 1 may be configured to be used in the sloped windshields 3 of vehicles to provide optical information 4 of what lies ahead of the vehicle, or alternatively configured to be used with the side windows, to provide optical information on what is present at the sides of or even behind the vehicle.

The invention is based in the realization that the sight-cone 4 of optical sensors 2 may be reduced through refracting the optical path 4 at the interface between the glass pane 3 and the ambient air. The present invention is in a first embodiment based on the use of a thin transparent film 5 and in a second embodiment based on the use of either of a machined or casted area 5 at the inside surface of the windowpane 3. In both embodiments this refractive transparent area 5 at the inside surface of the windowpane 3 has a Fresnel lens surface or alternatively a surface of light refracting prisms arranged in a pattern which corrects any possible distortion of the passage of light through the air/film/glass interface, or alternatively distorts in such a way that subsequent image processing easily may correct any errors caused thereby. The refractive transparent area 5 may be arranged at the inside of the glass pane 3 of the windshield 3, where it will be protected from any outside weather conditions and resulting fouling.

A method to reduce the area and volume requirements and optimize transmission for window 3 mounted optical sensors 2 for motor vehicles comprises the steps of: arranging an optical sensor 2 on the inner side of a windowpane 3 of the motor vehicle to condense light 4 coming from an object to be detected that is located outside the windowpane 3 of the motor vehicle and to obtain information from the light 4 that has been thus condensed; and providing a refractive transparent area 5 at the inside surface of the windowpane 3 between the windowpane 3 and the optical sensor 2 to refract the light 4 from the object to be detected that has passed through the windowpane 3.

In a first embodiment the method further comprises the step of providing the refractive transparent area 5 at the inside surface of the windowpane 3 through the application thereto of a refractive transparent film 5.

In a development of the first embodiment the method further comprises the step of providing the refractive transparent area 5 at the inside surface of the windowpane 3 as a Fresnel lens, where the Fresnel lens is arranged at the refractive transparent film 5.

In yet a development of the first embodiment the method further comprises the step of providing the refractive transparent area 5 at the inside surface of the windowpane 3 as a plurality of micro-prisms, where the plurality of micro-prisms are arranged at the refractive transparent film 5.

In still a development of the first embodiment the method further comprises the step of attaching the transparent refractive film 5 to the windowpane 3 by a light transmitting adhesive agent.

In an alternative second embodiment the method comprises the step of providing the refractive transparent area 5 at the inside surface of the windowpane 3 through either machining the area 5 at the inside surface of the windowpane 3 or through casting the windowpane 3 using a casting tool arranged to provide the refractive transparent area 5 at the inside surface of the windowpane 3.

In a development of the second embodiment the method further comprises the step of providing the refractive transparent area 5 at the inside surface of the windowpane 3 as a Fresnel lens, where the Fresnel lens is either machined from or casted at the inside surface 5 of the windowpane 3.

In yet a development of the second embodiment the method further comprises the step of providing the refractive transparent area 5 at the inside surface of the windowpane 3 as a plurality of micro-prisms, where the plurality of micro-prisms are either machined from or casted at the inside surface 5 of the windowpane 3.

Due to the fact that the film 5 and machined or casted area 5 adds essentially no thickness to the windowpane 3 it becomes possible to reduce the area and volume requirements and optimize transmission for window 3 mounted optical sensors 2 for motor vehicles. Furthermore, it thus becomes possible to achieve more space effective packaging of the optical sensor system 1 in closer proximity to the windowpane 3 than with the prior art arrangements.

As mentioned above, the present invention also relates to a window 3 mounted sensor system 1 for motor vehicles comprising an optical sensor 2, such as a camera, arranged on the inner side of a windowpane 3 of the motor vehicle to condense light 4 coming from an object to be detected that is located outside the windowpane 3 of the motor vehicle and to obtain information from the light 4 that has been thus condensed. The window 3 mounted sensor system 1 comprises a refractive transparent area 5 provided at the inside surface of the windowpane 3 between the windowpane 3 and the optical sensor 2 to refract the light 4 from the object to be detected that has passed through the windowpane 3.

In a first embodiment the system 1 further comprises that the refractive transparent area 5 at the inside surface of the windowpane 3 is provided by a refractive transparent film 5 attached thereto. The thin nature of the transparent refractive film 5 facilitates to optimize the packaging of the sensor system 1 in proximity to the windowpane 3. In this first embodiment, the transparent refractive film 5 is of optically transparent material and preferably a plastic film. It is possible, therefore, to acquire the transparent refractive film 5 at low cost. Furthermore, such a transparent refractive film 5 will be flexible and thus it will be possible to use it to achieve a perfect fit, even to a curved windowpane 3.

In a development of the first embodiment the sensor system 1 further comprises that the refractive transparent area 5 at the inside surface of the windowpane 3 is provided as a Fresnel lens, where the Fresnel lens is arranged at the refractive transparent film 5.

In yet a development of the first embodiment the sensor system 1 further comprises that the refractive transparent area 5 at the inside surface of the windowpane 3 is provided as a plurality of micro-prisms, where the plurality of micro-prisms are arranged at the refractive transparent film 5.

In still a development of the first embodiment the sensor system 1 further comprises that the transparent refractive film 5 is attached to the windowpane 3 by a light transmitting adhesive agent. Preferably, an adhesive with an index of refraction substantially similar to the windowpane 3 is used to mount the transparent refractive film 5 to the windowpane 3. As a result, the amount of light 4 lost due to difference between the index of refraction of the windowpane 3 and the adhesive is minimized. This is important as light 4 is frequently lost in the transmission when light 4 passes through boundaries with different indices of refraction.

Fig. 2 is a general schematic view of an exemplary optical sensor system 1 in accordance with the first embodiment, as described above. The optical sensor system 1 makes use of the transparent refractive film 5 that "bends" light 4 and conveys the light 4 to the optical sensor 2. This configuration minimizes the intrusion of the sensor system 1 into the passenger compartment, and allows for the elimination of external protrusions in providing side/rear views of the vehicle.

In an alternative second embodiment the sensor system 1 comprises that the refractive transparent area 5 at the inside surface of the windowpane 3 is provided by either a machined area 5 at the inside surface of the windowpane 3 or by an area 5 formed when the windowpane 3 was casted by the use of a casting tool arranged to provide the refractive transparent area 5 at the inside surface of the windowpane 3.

In a development of the second embodiment the sensor system 1 further comprises that the refractive transparent area 5 at the inside surface of the windowpane 3 is provided as a Fresnel lens, where the Fresnel lens is either machined from or casted at the inside surface 5 of the windowpane 3.

In yet a development of the second embodiment the sensor system 1 further comprises that the refractive transparent area 5 at the inside surface of the windowpane 3 is provided as a plurality of micro-prisms, where the plurality of micro-prisms are either machined from or casted at the inside surface 5 of the windowpane 3.

Further, the present invention also relates to an automotive vehicle, which comprises a window 3 mounted optical sensor system 1 for motor vehicles as described above.

Still further, the present invention also relates to a transparent refractive film 5 for a window 3 mounted optical sensor system 1 for motor vehicles as described above which comprises: a light-entrance surface configured to be attached to an inside surface of a windowpane 3 of a motor vehicle; and a light-exit surface configured to be facing an optical sensor 2 arranged on the inner side of a windowpane 3 of the motor vehicle; and the transparent refractive film being 5 configured to refract an optical path of light 4 by means of at least one of a Fresnel lens and a plurality of micro-prisms.

The transparent refractive film 5 may thus be provided for refracting the optical path of light 4 corresponding to an imaged area outside of a vehicle and to direct the light 4 to an optical sensor 2 arranged within the vehicle. The transparent refractive film 5 includes the light-entrance surface for mounting to the windowpane 3 of the vehicle and the light-exit surface configured to be facing the optical sensor 2 arranged on the inner side of the windowpane 3 of the motor vehicle. The transparent refractive film 5 minimizes the possibility that contaminants may accumulate in the optical path of light corresponding to the imaged area as the light 4 travels from the imaged area to the optical sensor 2. Further, the transparent refractive film 5 minimizes the footprint of the system 1 and reduces the surface area on the outside surface of the windowpane 3 that must be kept clean.

Further, transparent refractive films 5 may reduce or eliminate the need for external protrusions for viewing an imaged area, such as side-view areas. Accordingly, the transparent refractive film 5 in accordance with the present invention may be used in several applications, including frontal sensor systems and side view sensor systems.

There are several advantages provided by the method and system 1 in accordance with the present invention. Useful optical information 4 will more easily pass through the glass windowpane 3, interfering reflections are attenuated, and all in all the overall signal to noise relationship of the system 1 is increased rendering considerable improvements in performance. The amount of reflections from objects localized inside the windowpane 3 is reduced. Transmission is increased at flat angles, e.g. below 25°, between the optical sensor 2 and the windowpane 3. The focus may be varied through varying the arrangement of the Fresnel lens or the plurality of micro-prisms, allowing increased flexibility in placement of the optical sensor 2 in relation to the position and inclination of the windowpane 3. Using the above teachings it is also possible to minimize the intrusion of the optical sensor system 1 into the passenger compartment while optimizing the optical path 4 to the external-vehicle information being acquired. Further, it becomes possible to minimize the opportunity for contaminants (for example water vapor condensation, smoke, dust, etc.) to interfere in the optical path 4 between the inner surface of the windowpane 3 and the optical sensor 2.

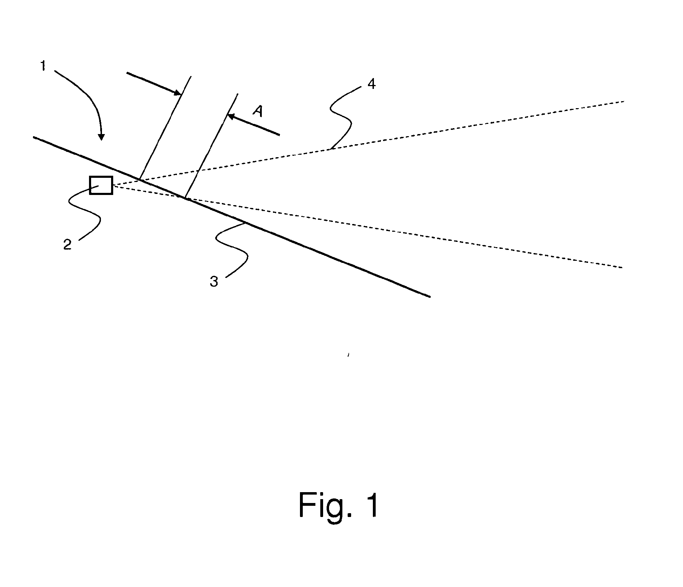

As previously discussed, several factors may affect the performance of the sensor system 1 including the presence of contaminants or other particles in the optical path 4. These contaminants may accumulate on either the surfaces inside or outside of the vehicle on the windowpane. For example, dirt or other contaminants may accumulate on the outside surface of the windowpane 3. The refractive transparent area 5 at the inside surface of the windowpane 3 minimizes the surface area that must be kept clean. More specifically, the optical path 4 of the sensor system 1 may be reduced to the surface area of the refractive transparent area 5 at the inside surface of the windowpane 3. This surface area B may, as shown in figure 2, be smaller than the surface area that must otherwise be kept clean, such as the prior art surface area A shown in Fig. 1. Further, the optical path of light 4 according to the present optical sensor system 1 may be placed closer to a viewer's field of view without placing the system 1 within the viewer's field of view. As a result, the overall footprint, or the entire space occupied by the system 1, may thereby be reduced.

It should be noted that the windowpanes 3 need only be transparent to the wavelengths of interest to the optical sensor system 1. For example, if the sensor system 1 is only sensing wavelengths in the near infrared-light that is not detectable by a human observer, (e.g. 700nm-1100nm) then the windowpanes 3 could be substantially opaque to a person viewing the windowpanes 3, yet still be transmissive to the light 4 that is being sensed through the windowpanes 3.

In all embodiments of the window 3 mounted sensor system 1 for motor vehicles according to the present invention, the system 1 should preferably be provided with a light shielding/absorbing means (not shown) for blocking or absorbing unwanted light coming from other than an object to be detected. Hence, the light shielding/absorbing means blocks or absorbs unwanted light rays, e.g., direct sunlight rays, thereby making it possible to obtain quality images free of ghost or flare.

A method and system in accordance with the present invention can also be applied where the optical sensors are replaced with window mounted light sources, such as modulated light sources or laser light sources, arranged at the inside of the window for illuminating an area outside of the vehicle.

The invention is not limited to the above-described embodiments, but may be varied within the scope of the following claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A method to reduce the area and volume requirements and optimize transmission for window (3) mounted optical sensors (2) for motor vehicles, comprising the steps of:
arranging an optical sensor (2) on the inner side of a windowpane (3) of the motor vehicle to condense light (4) coming from an object to be detected that is located outside the windowpane (3) of the motor vehicle and to obtain information from the light (4) that has been thus condensed; **characterised by** providing a refractive transparent surface area (5) comprising at least one of a Fresnel lens and a plurality of micro-prisms at the inside surface of the windowpane (3) adding essentially no thickness thereto between the windowpane (3) and the optical sensor (2) to refract the light (4) from the object to be detected that has passed through the windowpane (3).

2. A method according to claim 1, **characterized in that** it further comprises the step of providing the refractive transparent surface area (5) comprising at least one of a Fresnel lens and a plurality of micro-prisms at the inside surface of the windowpane (3) through the application thereto of a thin transparent refractive flexible plastic film (5) comprising at least one of a Fresnel lens and a plurality of micro-prisms.

3. A method according to claim 1, **characterized in that** it further comprises the step of providing the refractive transparent surface area (5) comprising at least one of a Fresnel lens and a plurality of micro-prisms at the inside surface of the windowpane (3) either through machining the surface area (5) at the inside surface of the windowpane (3) or through casting the windowpane (3) using a casting tool arranged to provide the refractive transparent surface area (5) comprising at least one of a Fresnel lens and a plurality of micro-prisms at the inside surface of the windowpane (3).

4. A method according to claim 2, **characterized in that** it further comprises the step of attaching the thin transparent refractive flexible plastic film (5) comprising at least one of a Fresnel lens and a plurality of micro-prisms to the windowpane (3) by a light transmitting adhesive agent.

5. A window (3) mounted sensor system (1) for motor vehicles having reduced area and volume requirements and optimized transmission properties comprising an optical sensor (2) arranged on the inner side of a windowpane (3) of the motor vehicle to condense light (4) coming from an object to be detected that is located outside the windowpane (3) of the motor vehicle and to obtain information from the light (4) that has been thus condensed; **characterized in that** it comprises a refractive transparent surface area (5) comprising at least one of a Fresnel lens and a plurality of microprisms provided at the inside surface of the windowpane (3) adding essentially no thickness thereto between the windowpane (3) and the optical sensor (2) to refract the light (4) from the object to be detected that has passed through the windowpane (3).

6. A window (3) mounted sensor system (1) for motor vehicles according to claim 5, **characterized in that** the refractive transparent surface area (5) at the inside surface of the windowpane (3) is provided by a thin transparent refractive flexible plastic film (5) comprising at least one of a Fresnel lens and a plurality of micro-prisms attached thereto.

7. A window (3) mounted sensor system (1) for motor vehicles according to claim 5, **characterized in that** the refractive transparent surface area (5) comprising at least one of a Fresnel lens and a plurality of micro-prisms at the inside surface of the windowpane (3) is provided either by a machined area (5) at the inside surface of the windowpane (3) or by an area (5) formed when the windowpane (3) was casted by the use of a casting tool arranged to provide the refractive transparent surface area (5) comprising at least one of a Fresnel lens and a plurality of micro-prisms at the inside surface of the windowpane (3).

8. A window (3) mounted sensor system (1) for motor vehicles according to claim 6, **characterized in that** the thin transparent refractive flexible plastic film (5) comprising at least one of a Fresnel lens and a plurality of micro-prisms is attached to the windowpane (3) by a light transmitting adhesive agent.

9. An automotive vehicle, **characterized in that** it comprises a window (3) mounted sensor system (1) for motor vehicles according to any one of claims 5 to 8.

10. A thin transparent refractive flexible plastic film (5) for a window (3) mounted sensor system (1) for motor vehicles according to any one of claims 5 to 8, **characterized in that** it comprises:
a light-entrance surface configured to be attached to an inside surface of a windowpane (3) of a motor vehicle; and
a light-exit surface configured to be facing an optical sensor (2) arranged on the inner side of a windowpane (3) of the motor vehicle; and
the transparent refractive film (5) being configured to refract an optical path of light (4) by means of at least one of a Fresnel lens and a plurality of micro-prisms.

## Patentansprüche

1. Verfahren zum Verringern der Flächen- und Volumenanforderungen und zum Optimieren der Transmission für an einem Fenster (3) montierte optische Sensoren (2) für Kraftfahrzeuge, das die folgenden Schritte umfasst:
Anordnen eines optischen Sensors (2) auf der Innenseite einer Fensterscheibe (3) des Kraftfahrzeugs, um Licht (4) zu verdichten, das von einem Objekt stammt, das detektiert werden soll und sich außerhalb der Fensterscheibe (3) des Kraftfahrzeugs befindet, und um Informationen aus dem Licht (4), das so verdichtet worden ist, zu erhalten; **gekennzeichnet durch**
Bereitstellen eines lichtbrechenden transparenten Oberflächenbereichs (5), der eine Fresnel-Linse und/oder mehrere Mikroprismen umfasst, an der Innenoberfläche der Fensterscheibe (3), zu der im Wesentlichen keine Dicke hinzugefügt wird, zwischen der Fensterscheibe (3) und dem optischen Sensor (2), um das Licht (4) von dem Objekt, das detektiert werden soll und das die Fensterscheibe (3) durchquert hat, zu brechen.

2. Verfahren nach Anspruch 1, **dadurch gekennzeichnet, dass** es ferner den Schritt des Bereitstellens des lichtbrechenden transparenten Oberflächenbereichs (5), der eine Fresnel-Linse und/oder mehrere Mikroprismen umfasst, an der Innenoberfläche der Fensterscheibe (3) indem daran ein dünner transparenter lichtbrechender flexibler Kunststofffilm (5), der eine Fresnel-Linse und/oder mehrere Mikroprismen umfasst, angebracht wird, umfasst.

3. Verfahren nach Anspruch 1, **dadurch gekennzeichnet, dass** es ferner den Schritt des Bereitstellens des lichtbrechenden transparenten Oberflächenbereichs (5), der eine Fresnel-Linse und/oder mehrere Mikroprismen umfasst, an der Innenoberfläche der Fensterscheibe (3) entweder durch mechanische Bearbeitung des Oberflächenbereichs (5) an der Innenoberfläche der Fensterscheibe (3) oder durch Gießen der Fensterscheibe (3) mittels eines Gusswerkzeugs umfasst, das dazu ausgelegt ist, den lichtbrechenden transparenten Oberflächenbereich (5), der eine Fresnel-Linse und/oder mehrere Mikroprismen umfasst, an der Innenoberfläche der Fensterscheibe (3) bereitzustellen.

4. Verfahren nach Anspruch 2, **dadurch gekennzeichnet, dass** es ferner den Schritt des Befestigens des dünnen transparenten lichtbrechenden flexiblen Kunststofffilms (5), der eine Fresnel-Linse und/oder mehrere Mikroprismen umfasst, an der Fensterscheibe (3) durch ein lichtdurchlässiges Klebemittel umfasst.

5. An einem Fenster (3) montiertes Sensorsystem (1) für Kraftfahrzeuge, das verringerte Flächen- und Volumenanforderungen und optimierte Transmissionseigenschaften besitzt und einen optischen Sensor (2) umfasst, der auf der Innenseite einer Fensterscheibe (3) des Kraftfahrzeugs angeordnet ist, um Licht (4) zu verdichten, das von einem Objekt stammt, das detektiert werden soll und sich außerhalb der Fensterscheibe (3) des Kraftfahrzeugs befindet, und um Informationen aus dem Licht (4), das so verdichtet worden ist, zu erhalten; **dadurch gekennzeichnet, dass** es einen lichtbrechenden transparenten Oberflächenbereich (5), der eine Fresnel-Linse und/oder mehrere Mikroprismen umfasst, an der Innenoberfläche der Fensterscheibe (3), zu der im Wesentlichen keine Dicke hinzugefügt wird, zwischen der Fensterscheibe (3) und dem optischen Sensor (2) umfasst, um das Licht (4) von dem Objekt, das detektiert werden soll und das die Fensterscheibe (3) durchquert hat, zu brechen.

6. An einem Fenster (3) montiertes Sensorsystem (1) für Kraftfahrzeuge nach Anspruch 5, **dadurch gekennzeichnet, dass** der lichtbrechende transparente Oberflächenbereich (5) an der Innenoberfläche der Fensterscheibe (3) durch einen dünnen transparenten lichtbrechenden flexiblen Kunststofffilm (5) bereitgestellt ist, der eine Fresnel-Linse und/oder mehrere Mikroprismen umfasst, die daran befestigt sind.

7. An einem Fenster (3) montiertes Sensorsystem (1) für Kraftfahrzeuge nach Anspruch 5, **dadurch gekennzeichnet, dass** der lichtbrechende transparente Oberflächenbereich (5), der eine Fresnel-Linse und/oder mehrere Mikroprismen umfasst, an der Innenoberfläche der Fensterscheibe (3) entweder durch einen mechanisch bearbeiteten Bereich (5) an der Innenoberfläche der Fensterscheibe (3) oder durch einen Bereich (5) bereitgestellt ist, der ausgebildet wurde, als die Fensterscheibe (3) unter Verwendung eines Gusswerkzeugs gegossen wurde, das dazu ausgelegt ist, den lichtbrechenden transparenten Oberflächenbereich (5), der eine Fresnel-Linse und/oder mehrere Mikroprismen umfasst, an der Innenoberfläche der Fensterscheibe (3) bereitzustellen.

8. An einem Fenster (3) montiertes Sensorsystem (1) für Kraftfahrzeuge nach Anspruch 6, **dadurch gekennzeichnet, dass** der dünne transparente lichtbrechende flexible Kunststofffilm (5), der eine Fresnel-Linse und/oder mehrere Mikroprismen umfasst, an der Fensterscheibe (3) durch ein lichtdurchlässiges Klebemittel befestigt ist.

9. Kraftfahrzeug, **dadurch gekennzeichnet, dass** es ein an einem Fenster (3) montiertes Sensorsystem (1) für Kraftfahrzeuge nach einem der Ansprüche 5 bis 8 umfasst.

10. Dünner transparenter lichtbrechender flexibler Kunststofffilm (5) für ein an einem Fenster (3) montiertes Sensorsystem (1) für Kraftfahrzeuge nach einem der Ansprüche 5 bis 8, **dadurch gekennzeichnet, dass** er Folgendes umfasst:
eine Lichteintrittsfläche, die dazu ausgelegt ist, an einer Innenfläche einer Fensterscheibe (3) eines Kraftfahrzeugs befestigt zu werden; und
eine Lichtaustrittsfläche, die dazu ausgelegt ist, einem optischen Sensor (2) zugewandt zu sein, der auf der Innenseite einer Fensterscheibe (3) des Kraftfahrzeugs angeordnet ist;
wobei der transparente lichtbrechende Film (5) dazu ausgelegt ist, einen optischen Weg des Lichts (4) unter Verwendung einer Fresnel-Linse und/oder mehrerer Mikroprismen zu brechen.

## Revendications

1. Procédé de réduction des exigences de superficie et de volume et d'optimisation de la transmission pour des capteurs optiques (2) montés sur vitres (3) pour véhicules à moteur, comprenant les étapes consistant à :
disposer un capteur optique (2) sur le côté intérieur d'une vitre (3) du véhicule à moteur pour condenser la lumière (4) provenant d'un objet à détecter qui est situé à l'extérieur de la vitre (3) du véhicule à moteur et pour obtenir des informations à partir de la lumière (4) qui a été ainsi condensée ; **caractérisé par**
l'obtention d'une surface transparente réfractive (5) comprenant une lentille de Fresnel et/ou une pluralité de microprismes au niveau de la surface intérieure de la vitre (3) en n'ajoutant pratiquement aucune épaisseur à celle-ci entre la vitre (3) et le capteur optique (2) pour réfracter la lumière (4) provenant de l'objet à détecter qui a traversé la vitre (3).

2. Procédé selon la revendication 1, **caractérisé en ce qu'**il comprend en outre l'étape d'obtention de la surface transparente réfractive (5) comprenant une lentille de Fresnel et/ou une pluralité de microprismes au niveau de la surface intérieure de la vitre (3) par l'application à celle-ci d'un film mince de plastique souple transparent réfractif (5) comprenant une lentille de Fresnel et/ou une pluralité de microprismes.

3. Procédé selon la revendication 1, **caractérisé en ce qu'**il comprend en outre l'étape d'obtention de la surface transparente réfractive (5) comprenant une lentille de Fresnel et/ou une pluralité de microprismes au niveau de la surface intérieure de la vitre (3) par usinage de la surface (5) au niveau de la surface intérieure de la vitre (3) ou par moulage de la vitre (3) à l'aide d'un outil de moulage configuré pour obtenir la surface transparente réfractive (5) comprenant une lentille de Fresnel et/ou une pluralité de microprismes au niveau de la surface intérieure de la vitre (3).

4. Procédé selon la revendication 2, **caractérisé en ce qu'**il comprend en outre l'étape de fixation du film mince de plastique souple transparent réfractif (5) comprenant une lentille de Fresnel et/ou une pluralité de microprismes à la vitre (3) par un agent adhésif transmettant la lumière.

5. Système de capteurs (1) montés sur vitres (3) pour véhicules à moteur ayant des exigences de superficie et de volume réduites et des propriétés de transmission optimisées comprenant un capteur optique (2) disposé sur le côté intérieur d'une vitre (3) du véhicule à moteur pour condenser la lumière (4) provenant d'un objet à détecter qui est situé à l'extérieur de la vitre (3) du véhicule à moteur et pour obtenir des informations à partir de la lumière (4) qui a été ainsi condensée ; **caractérisé en ce qu'**il comprend une surface transparente réfractive (5) comprenant une lentille de Fresnel et/ou une pluralité de microprismes disposée au niveau de la surface intérieure de la vitre (3) en n'ajoutant pratiquement aucune épaisseur à celle-ci entre la vitre (3) et le capteur optique (2) pour réfracter la lumière (4) provenant de l'objet à détecter qui a traversé la vitre (3).

6. Système de capteurs (1) montés sur vitres (3) pour véhicules à moteur selon la revendication 5, **caractérisé en ce que** la surface transparente réfractive (5) au niveau de la surface intérieure de la vitre (3) est fournie par un film mince de plastique souple transparent réfractif (5) comprenant une lentille de Fresnel et/ou une pluralité de microprismes fixé à celle-ci.

7. Système de capteurs (1) montés sur vitres (3) pour véhicules à moteur selon la revendication 5, **caractérisé en ce que** la surface transparente réfractive (5) comprenant une lentille de Fresnel et/ou une pluralité de microprismes au niveau de la surface intérieure de la vitre (3) est fournie par une surface usinée (5) au niveau de la surface intérieure de la vitre (3) ou par une surface (5) formée quand la vitre (3) a été moulée à l'aide d'un outil de moulage configuré pour obtenir la surface transparente réfractive (5) comprenant une lentille de Fresnel et/ou une pluralité de microprismes au niveau de la surface intérieure de la vitre (3).

8. Système de capteurs (1) montés sur vitres (3) pour véhicules à moteur selon la revendication 6, **caractérisé en ce que** le film mince de plastique souple transparent réfractif (5) comprenant une lentille de Fresnel et/ou une pluralité de microprismes est fixé à la vitre (3) par un agent adhésif transmettant la lumière.

9. Véhicule automobile, **caractérisé en ce qu'**il comprend un système de capteurs (1) monté sur vitres (3) pour véhicules à moteur selon l'une quelconque des revendications 5 à 8.

10. Film mince de plastique souple transparent réfractif (5) pour un système de capteurs (1) montés sur vitres (3) pour véhicules à moteur selon l'une quelconque des revendications 5 à 8, **caractérisé en ce qu'**il comprend :
une surface d'entrée de lumière configurée pour être fixée à une surface intérieure d'une vitre (3) d'un véhicule à moteur ; et
une surface de sortie de lumière configurée pour faire face à un capteur optique (2) disposé sur le côté intérieur d'une vitre (3) du véhicule à moteur ; et
le film transparent réfractif (5) étant configuré pour réfracter un chemin optique de lumière (4) au moyen d'une lentille de Fresnel et/ou d'une pluralité de microprismes.
